# EUROPÄISCHE PATENTSCHRIFT

(11) **EP 2 045 158 B1**
(45) Veröffentlichungstag und Bekanntmachung des Hinweises auf die Patenterteilung: **01.05.2013**
(21) Anmeldenummer: 08017271.1
(22) Anmeldetag: 01.10.2008
(51) Int. Cl.: B60T 17/02, B60T 8/17, B60T 11/32, B60T 13/26, B60T 17/00, B60T 17/20, B60T 17/22

(54) **Druckluftversorgungseinrichtung mit Leckagenanalyse und Verfahren zum Betreiben einer solchen Druckluftversorgungseinrichtung**
Pressurised air supply device with leak analysis and method for operating same
Dispositif d'alimentation en air comprimé doté d'une analyse des fuites et procédé de fonctionnement d'un tel dispositif d'alimentation en air comprimé

(30) Priorität: 01.10.2007 DE 102007046944
(43) Veröffentlichungstag der Anmeldung: 08.04.2009
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- EP-A1- 0 477 519
- EP-A1- 1 164 067
- EP-A1- 1 731 335
- EP-A1- 1 731 395
- EP-A2- 0 535 392
- EP-A2- 0 976 636
- EP-A2- 1 288 095
- DE-A1- 10 357 766
- DE-A1- 19 955 797
- DE-A1-102004 005 569

## Beschreibung

Die Erfindung betrifft eine Druckluftversorgungseinrichtung für ein Nutzfahrzeug, mit einem Druckluftversorgungsmodul, das ein Steuergerät mit einem direkt oder indirekt an einen externen Timer gekoppelten Aufweckschaltkreis aufweist, einem Anschluss an den CAN Bus oder ein serielles Datenübertragungssystem des Nutzfahrzeugs und mindestens einem Anschluss für ein Druckluftnutzendes Teilsystem des Nutzfahrzeugs, wobei das Steuergerät mit Aufweckschaltkreis eine Messung mindestens eines Systemdrucks wiederholt durchführt und weiterverarbeitet, wenn die Zündung des Nutzfahrzeugs eingeschaltet ist.

Die Erfindung betrifft weiterhin ein Verfahren zum steuern einer Druckluftversorgungseinrichtung für ein Nutzfahrzeug, mit einem Druckluftversorgungsmodul, das ein Steuergerät mit einem direkt oder indirekt an einen externen Timer gekoppelten Aufweckschaltkreis aufweist, einem Anschluss an den CAN Bus oder ein serielles Datenübertragungssystem des Nutzfahrzeugs und mindestens einem Anschluss für ein Druckluftnutzendes Teilsystem des Nutzfahrzeugs, wobei das Steuergerät mit Aufweckschaltkreis eine Messung mindestens eines Systemdrucks wiederholt durchführt und weiterverarbeitet, wenn die Zündung des Nutzfahrzeugs eingeschaltet ist.

Gattungsgemäße Einrichtungen und Verfahren sind z.B. aus den DE 10357766 A1, DE 10 2004 005569 A1 oder EP 1 731 335 bekannt.

Moderne Nutzfahrzeuge besitzen üblicherweise eine Druckluftversorgungseinrichtung, die gereinigte und getrocknete Druckluft für verschiedene Systeme des Nutzfahrzeugs bereitstellt. Beispielsweise werden die Betriebsbremsen und eine eventuell vorhandene Luftfederung des Nutzfahrzeugs von der Druckluftaufbereitungsanlage versorgt. In die Druckluftaufbereitungsanlage kann ein Steuergerät zum Ansteuern elektrischer Magnetventile und Auswerten von Sensorsignalen integriert sein. Die Magnetventile können alternativ auch von einem externen Steuergerät entsprechend verschiedener Systemparameter angesteuert werden. Derartige Steuergeräte erhalten weitere Systemparameter über einen seriellen Kommunikationsanschluss, zum Beispiel den CAN Bus. Beispielsweise können Daten der Betriebsbremse und einer eventuell vorhandenen Luftfederung der Druckluftaufbereitungsanlage übermittelt werden. Die Druckluftaufbereitungsanlage selbst erhält die noch nicht gereinigte und getrocknete Druckluft von einem angeschlossenen Kompressor, der zusammen mit der Druckluftaufbereitungsanlage die Druckluftversorgungseinrichtung bildet. Die Energie zum Betreiben des Kompressors kann in einfacher Weise über eine Welle vom Antriebsmotor des Nutzfahrzeugs zum Kompressor übertragen werden.

Im Laufe der Zeit wurden immer mehr Druckluftnutzende Teilsysteme in das Nutzfahrzeug integriert. Zu der bereits erwähnten Betriebsbremse und der Luftfederung kann beispielsweise noch eine zusätzliche Luftfederung für das Fahrerhaus, eine Druckluftbetriebene Getriebesteuerung und die Versorgung eines eventuell vorhandenen Anhängers mit Druckluft. Die Anzahl aller Druckluftführenden Komponenten und Leitungen in dem Nutzfahrzeug ist daher stark angewachsen.

Tritt im Defektfall an einem der Druckluftführenden Komponenten eine Leckage auf, so ist diese zunächst aufgrund der großen Anzahl möglicher Leckageorte nicht genauer eingrenzbar. Die Druckluftversorgungseinrichtung und die an sie angeschlossenen Teilsysteme sind im Betrieb in der Lage größere Leckagen, das heißt Druckverluste, zu detektieren und entsprechende Maßnahmen, wie das Abschalten des defekten Teilsystems und die Ausgabe einer entsprechenden Warnung an den Fahrer, vorzunehmen.

Durch den Betrieb des Nutzfahrzeugs und den daraus resultierenden Luftverbrauch durch die Teilsysteme beziehungsweise der Nachförderung durch den Kompressor ändern sich die Druckverhältnisse innerhalb der Druckluftführenden Komponenten ständig und zumindest kleinere Leckagen können leicht übersehen werden. Auch können manche Teilsysteme während des Betriebs aus Sicherheitsgründen nicht von der Druckversorgung abgekoppelt werden, was eine Eingrenzung des Orts der Leckage erschwert.

Dies ist nachteilig, da bereits kleinere Leckagen zu einem deutlich erhöhten Luftverbrauch des Nutzfahrzeugs und damit zu einem erhöhten Energieverbrauch führen. Darüber hinaus ist die Gefahr vorhanden, dass eine kleine Leckage zu einem großen Leck wird und im schlimmsten Fall das gesamte Nutzfahrzeug nicht mehr fahrtüchtig ist.

Der Erfindung liegt die Aufgabe zugrunde, die Detektion von Leckagen des Druckluftsystems des Nutzfahrzeugs zu verbessern.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Druckluftversorgungseinrichtung dadurch auf, dass der externe Timer in der Weise ausgebildet ist, dass er Aufwecksignale an das Steuergerät mit Aufweckschaltkreis ausgibt und dass das Steuergerät mit Aufweckschaltkreis in der Weise ausgebildet ist, dass es im Anschluss an den Empfang eines Aufwecksignals eine Messung mindestens eines Systemdrucks durchführt und weiterverarbeitet, auch wenn die Zündung des Nutzfahrzeugs ausgeschaltet ist. Die Messung und Weiterverarbeitung mindestens eines Systemdrucks, auch wenn die Zündung des Nutzfahrzeugs ausgeschaltet ist, ermöglicht die Leckagenanalyse bei einem abgestellten Fahrzeug. Die Detektion von Leckagen wird so vereinfacht, da weniger Störgrößen vorhanden sind. Beispielsweise ist eine Nachförderung durch den Kompressor der Druckluftversorgungseinrichtung ausgeschlossen und die meisten der in dem Nutzfahrzeug vorhandenen Teilsysteme verbrauchen im Stand ebenfalls keine Druckluft. Um eine permanente Überwachung der Systemdrücke bei ausgeschalteter Zündung zu vermeiden, gibt der externe Timer genau dann ein Aufwecksignal an das Steuergerät mit Aufweckschaltkreis aus, wenn die nächste Messung der Systemdrücke erfolgen soll. Somit kann das Steuergerät in eine Standby-Betriebsart versetzt werden, während der externe Timer normal betrieben wird. Diese Aufteilung ist vorteilhaft und energiesparend, da das Nutzfahrzeug üblicherweise bereits einen Timer, beispielsweise im Tachographen zum Betrieb des Fahrtenschreibers, integriert hat, der durchgängig in Betrieb sein muss. Optional kann auch der Timer eines externen GPS bzw. einer externen Echtzeituhr verwendet werden. Die Zeitabstände nach denen ausgehend vom Abschalten der Zündung Aufwecksignale von dem externen Timer an das Steuergerät ausgegeben werden sollen, können beispielsweise fest in dem externen Timer gespeichert sein. Der Aufweckschaltkreis besteht aus zumindest aus einem Daten- oder Signaleingangsanschluß und einer Ausgangsleitung, welche es ermöglicht das Steuergerät einzuschalten. Weiterhin kann der Aufweckschaltkreis zumindest teilweise in einen weiteren Schaltkreis, z.B. einen Mikrocontroller oder einen Watch-Dog Timer integriert sein.

Die Energie des Eingangssignals kann dazu verwendet werden, das Aufwecken des Steuergeräts auch bei abgeschalteter Stromversorgung des Steuergeräts durchzuführen.

Vorteilhafterweise kann vorgesehen sein, dass die Druckluftversorgungseinrichtung Anschlüsse für Sensoren aufweist. Sensoren die direkt der Druckluftversorgungseinrichtung zugehörig sind, können mit einem geringeren Energieverbrauch betrieben werden, da keine zwischenliegende Busleitung versorgt werden muss.

Nützlicherweise kann vorgesehen sein, dass das Steuergerät mit Aufweckschaltkreis indirekt über den CAN Bus mit dem externen Timer gekoppelt ist. Wenn der externe Timer an den CAN Bus gekoppelt ist, kann so eine bereits bestehende Kopplung in dem Nutzfahrzeug zur Übertragung der Aufwecksignale an das Steuergerät mit Aufweckschaltkreis verwendet werden, da die Druckluftversorgungseinrichtung üblicherweise mit dem CAN Bus gekoppelt ist.

Es kann aber auch vorgesehen sein, dass das Steuergerät mit Aufweckschaltkreis direkt über eine separate Leitung mit dem externen Timer gekoppelt ist. Eine derartige Anordnung erfordert zwar eine zusätzliche Verbindungsleitung zwischen dem externen Timer und dem Steuergerät mit Aufweckschaltkreis, ermöglicht jedoch eine effizientere Energieausnutzung, da der Aufweckschaltkreis des Steuergeräts der Druckluftversorgungseinrichtung vom CAN Bus entkoppelt werden kann, wodurch ein einfacherer Aufbau ermöglicht wird. Es müssen also während einer Standby-Phase weniger elektrische Komponenten mit Strom versorgt werden.

Weiterhin kann vorgesehen sein, dass das Steuergerät mit Aufweckschaltkreis in der Weise ausgebildet ist, dass bei der Weiterverarbeitung des gemessenen mindestens einen Systemdrucks ein Zeitintervall bestimmbar ist, nach dessen Verstreichen eine erneut Messung erfolgen soll und diese Information an den externen Timer sendet. Die Bestimmung des Zeitintervalls zwischen zwei Messungen durch das Steuergerät mit Aufweckschaltkreis ermöglicht eine flexiblere Leckageanalyse des Druckluftsystems. So kann beispielsweise bei vermuteten kleineren Leckagen ein längerer Abstand zwischen zwei Messungen gewählt werden, um die Messgenauigkeit zu verbessern. Umgekehrt kann das Zeitintervall zwischen zwei Messungen verkürzt werden, um den Luftverlust des Druckluftsystems zu minimieren, wenn eine größere Leckage vermutet wird.

Vorteilhafterweise kann vorgesehen sein, dass das Steuergerät mit Aufweckschaltkreis in der Weise ausgebildet ist, dass ein mit der Druckluftversorgungseinrichtung verbundenes Teilsystem des Nutzfahrzeugs, das auch bei ausgeschalteter Zündung Druckluft verbrauchen kann, durch ein Schließventil vollständig von der Druckluftversorgung entkoppelbar ist. Einige Teilsysteme des Nutzfahrzeugs können auch bei ausgeschalteter Zündung eine gewisse Menge an Druckluft verbrauchen. Zu diesen Teilsystemen gehört beispielsweise auch eine Luftfederung des Fahrerhauses. Diese Federung erlaubt eine leicht Pendelbewegung des Fahrerhauses gegenüber dem Fahrgestell des Nutzfahrzeugs. Die Pendelbewegung kann auch bei einem stehenden Nutzfahrzeug, beispielsweise durch an das Fahrerhaus angreifenden Wind, ausgelöst werden. Die Menge der bei der Dämpfung der Pendelbewegung verbrauchten Luft ist nur schwer einschätzbar. Daher ist ein derartiger Luftverbrauch unerwünscht, auch wenn er nur ein geringes Luftvolumen umfasst. Werden alle auch bei ausgeschalteter Zündung Druckluftverbrauchenden Teilsysteme des Nutzfahrzeugs durch ein Schließventil vom restlichen Druckluftsystem entkoppelt, wird die Messgenauigkeit zur Leckagenbestimmung erhöht, da weitere Störgrößen ausgeschaltet sind.

Nützlicherweise kann vorgesehen sein, dass das Steuergerät mit Aufweckschaltkreis in der Weise ausgebildet ist, dass bei der Weiterverarbeitung des gemessenen mindestens einen Systemdrucks bei ausgeschalteter Zündung ein Ventil zum Unterteilen des Druckluftversorgungssystems schaltbar ist. Wenn eine erste Messung des Systemdrucks ergeben hat, dass eine Leckage vorliegt, so ist zunächst der Ort der Leckage nicht bestimmt. Durch die Unterteilung des Druckluftführenden Systems durch ein Ventil in mehrere Abschnitte kann der Ort der Leckage näher bestimmt werden. Es ist so auch möglich, einen eventuell angeschlossenen Anhänger separat auf Dichtigkeit zu überprüfen, da zwischen dem Druckanschluss des Anhängers und dem Druckbehälter üblicherweise ein Ventil angeordnet ist, das ein selbstständiges Bremsen des Anhängers bei Abriss der Versorgungs- bzw. Steuerleitung des Anhängers erlaubt.
Das Überprüfen eines Anhängers auf Dichtigkeit ist besonders sinnvoll, da Anhänger üblicherweise weniger häufig gewartet werden.

Vorteilhafterweise kann vorgesehen sein, dass das Steuergerät mit Aufweckschaltkreis in der Weise ausgebildet ist, dass es sich nach der Weiterverarbeitung des gemessenen mindestens einen Systemdrucks bei ausgeschalteter Zündung deaktiviert. Durch die Deaktivierung des Steuergerätes mit Aufweckschaltkreis nach der vorgesehenen Weiterverarbeitung des gemessenen Systemdrucks wird ein Dauerbetrieb des Steuergeräts unterbunden, um eine übermäßige Entladung der Batterien des Nutzfahrzeugs im Stand zu vermeiden. Die vollständige Entladung der Batterien des Nutzfahrzeugs ist unerwünscht, da durch sie eine problemlose Wiederinbetriebnahme erschwert würde.

Vorteilhafterweise kann vorgesehen sein, dass das Steuergerät mit Aufweckschaltkreis in der Weise ausgebildet ist, dass der Wert des gemessenen mindestens einen Systemdrucks mit von Temperatursensoren des Druckluftversorgungssystems gemessenen Temperaturen korrigierbar ist. Einzelne Bereiche des Druckluftversorgungssystems des Nutzfahrzeugs erwärmen sich während des Betriebs stark, was zu einem erhöhten Druck, beziehungsweise geringeren Luftvolumen in diesen Teilbereichen führt. Nach Abstellen des Nutzfahrzeugs kühlen diese Bereiche aus, was gleichzeitig zu einer Druckminderung führt, ohne jedoch eine Leckage darzustellen. Die Korrektur mit den gemessenen Temperaturwerten erlaubt eine Unterscheidung zwischen einer Leckage und einer Druckminderung durch Temperaturänderung.

Es kann auch vorgesehen sein, dass das Steuergerät mit Aufweckschaltkreis in der Weise ausgebildet ist, dass der Wert des gemessenen mindestens einen Systemdrucks mit von nicht dem Druckluftversorgungssystem zugehörigen Temperatursensoren gemessenen Temperaturen korrigierbar ist. Es ist beispielsweise denkbar, dass die Umgebungstemperatur des abgestellten Nutzfahrzeugs bei Nachteinbruch stark absinkt, was sich in einer Druckschwankung in dem Druckluftsystem bemerkbar macht. Hierzu ist zu bemerken, dass nicht überall in dem Druckluftversorgungssystem Temperatursensoren vorgesehen sein müssen wo Drucksensoren vorgesehen sind, eine von außen induzierte Temperaturänderung also nicht unbedingt von internen Temperatursensoren wahrgenommen werden muss, jedoch in einer messbaren Druckänderung resultieren kann.

Es kann auch vorgesehen sein, dass das Steuergerät mit Aufweckschaltkreis eine Pufferbatterie aufweist.

Weiterhin kann vorgesehen sein, dass der externe Timer eine Pufferbatterie aufweist. Eine Pufferbatterie ermöglicht ein Abklemmen der Fahrzeugbatterie zu Wartungszwecken, ohne dass die Leckageanalyse bei abgestelltem Fahrzeug beeinträchtigt würde.

Die Erfindung baut auf den gattungsgemäßen Verfahren dadurch auf, dass der externe Timer Aufwecksignale an das Steuergerät mit Aufweckschaltkreis ausgibt und dass das Steuergerät mit Aufweckschaltkreis im Anschluss an den Empfang eines Aufwecksignals eine Messung mindestens eines Systemdrucks durchführt und weiterverarbeitet, auch wenn die Zündung des Nutzfahrzeugs ausgeschaltet ist.

Auf diese Weise werden die Vorteile und Besonderheiten der erfindungsgemäßen Druckluftversorgungseinrichtung auch im Rahmen eines Verfahrens umgesetzt. Dies gilt auch für die besonders bevorzugten Ausführungsformen des erfindungsgemäßen Verfahrens.

Dies kann dadurch weitergebildet werden, dass das Aufwecksignal von dem externen Timer über den CAN Bus an das Steuergerät mit Aufweckschaltkreis gesendet wird.

Alternativ kann vorgesehen sein, dass das Aufwecksignal von dem externen Timer über eine separate Leitung an das Steuergerät mit Aufweckschaltkreis gesendet wird.

Vorteilhafterweise kann vorgesehen sein, dass bei der Weiterverarbeitung des gemessenen mindestens einen Systemdrucks ein Zeitintervall bestimmt wird, nach dessen Verstreichen eine erneute Messung erfolgen soll und diese Information an den externen Timer sendet.

Es kann auch nützlich sein, dass ein mit der Druckluftversorgungseinrichtung verbundenes Teilsystem des Nutzfahrzeugs, das auch bei ausgeschalteter Zündung Druckluft verbrauchen kann, durch ein Schließventil vollständig von der Druckluftversorgung entkoppelt wird.

Es kann besonders nützlich sein, dass bei der Weiterverarbeitung des gemessenen mindestens einen Systemdrucks bei ausgeschalteter Zündung ein Ventil zum Unterteilen des Druckluftversorgungssystems geschaltet wird.

Als Maßnahme gegen eine vollständige Entladung der Batterien kann vorgesehen sein, dass sich das Steuergerät mit Aufweckschaltkreis nach der Weiterverarbeitung des gemessenen mindestens einen Systemdrucks bei ausgeschalteter Zündung deaktiviert.

Nützlicherweise kann vorgesehen sein, dass der Wert des gemessenen mindestens einen Systemdrucks mit von Temperatursensoren des Druckluftsystems gemessenen Temperaturen korrigiert wird.

Es kann auch vorgesehen sein, dass der Wert des gemessenen mindestens einen Systemdrucks mit von nicht dem Druckluftversorgungssystem zugehörigen Temperatursensoren gemessenen Temperaturen korrigiert wird.

Es kann ebenfalls vorgesehen sein, dass das Volumen der Druckluftanlage beim Befüllen bestimmt wird. Das Volumen der Druckluftanlage ist in beträchtlichen Maße Schwankungen unterworfen, weshalb die Bestimmung des Volumens beim Befüllen sinnvoll ist. Beispielsweise ändert sich das Volumen der Druckluftanlage dramatisch, wenn als Teilsystem ein Anhänger an das Nutzfahrzeug angeschlossen wird.

Die Erfindung wird nun mit Bezug auch die begleitenden Zeichnungen anhand besonders bevorzugter Ausführungsformen beispielhaft erläutert. Es zeigen:
- Figur 1: eine schematische Darstellung einer Druckluftversorgungseinrichtung mit angeschlossenen Teilsystemen;
- Figur 2: ein Flussdiagramm eines einfachen erfindungsgemäßen Leckagenanalyseverfahrens;
- Figur 3: ein Flussdiagramm eines erweiterten erfindungsgmäßen Leckagenanalyseverfahrens und
- Figur 4: ein Diagramm zur Veranschaulichung der Datenverknüpfung innerhalb des Leckageanalyseverfahrens.

Bei der nachfolgenden Beschreibung der Zeichnungen bezeichnen gleiche Bezugszeichen gleiche oder vergleichbare Komponenten.

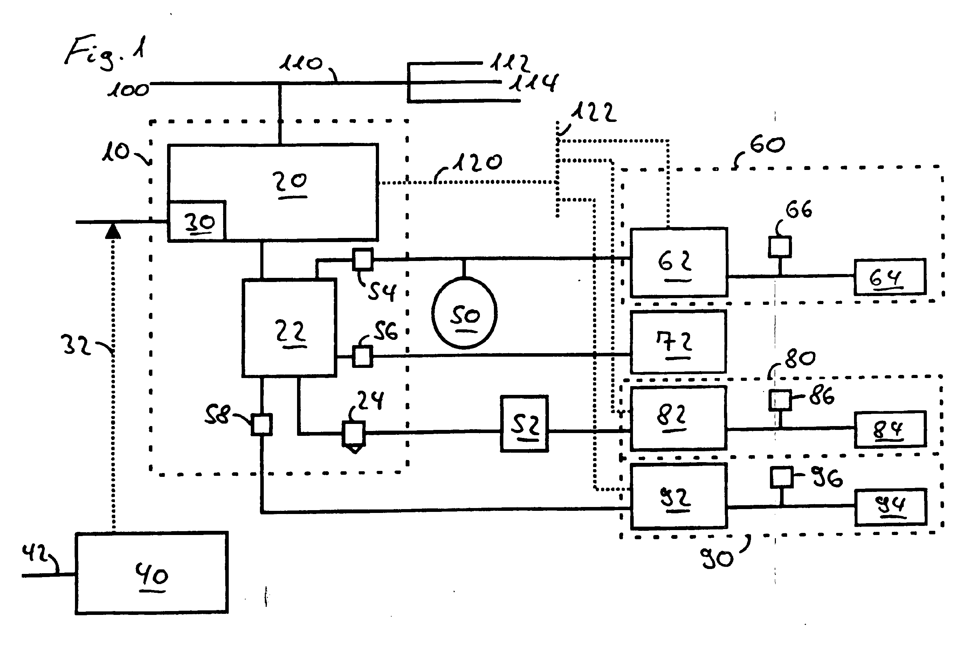

Figur 1 zeigt eine schematische Darstellung einer Druckluftversorgungseinrichtung 10 mit angeschlossenen Teilsystemen 60, 72, 80, 90. Die Druckluftversorgungseinrichtung 10 weist Anschlüsse für interne und externe Sensoren 100, 110 und eine Anschlussleitung 120 an den CAN Bus 122 auf. Weiterhin ist eine separate Anschlussleitung 32 an einen externen Timer 40 dargestellt, der über eine Versorgungsleitung 42 mit Strom versorgt wird. Der externe Timer 40 kann beispielsweise Teil des dem Tachographen zugehörigen Fahrtenschreibers sein, was jedoch keine Vorraussetzung ist. Wichtig ist lediglich eine zeitmessende Quelle, die beispielsweise auch einem GPS-System zugeordnet sein kann. Die Anschlussleitung 32 verbindet den externen Timer 40 direkt ohne Umweg über den CAN Bus 122 mit einem innerhalb der Druckluftversorgungseinrichtung 10 angeordneten Steuergerät mit Aufweckschaltkreis 30. Die Druckluftversorgungseinrichtung 10 weist neben dem Steuergerät mit Aufweckschaltkreis 30, das zu einem Luftversorgungsmodul 20 gehört, ein Mehrkreisschutzventil 22 und mehrere Schließventile 54, 56 und 58 und ein Druckbegrenzungsventil 24 auf. Nicht näher dargestellt sind weitere übliche Bestandteile der Druckluftversorgungseinrichtung 10 die in dem Luftversorgungsmodul 20 zusammengefasst sind. Zu ihnen gehört beispielsweise eine Lufttrockneranlage mit einem Luftfilter beziehungsweise einer Luftfilterpatrone, ein Druckregler, der beispielsweise ein Druckreglerventil umfassen kann, eine Ventileinrichtung zur Regeneration des Lufttrockners und einem Kompressor zur Bereitstellung komprimierter Druckluft. Sämtliche notwendigen Funktionen der Druckluftversorgungseinrichtung 10, die einer Steuerung bedürfen, können von dem Steuergerät 30 durchgeführt werden. An das Mehrkreisschutzventil 22 sind verschiedene Teilsysteme 60, 72, 80, 90 des Nutzfahrzeugs angeschlossen. Beispielsweise ein elektronisches Bremssystem 60, das ein Steuergerät mit Ventileinrichtungen 62, einen Bremszylinder 64 und einen Drucksensor 66 aufweist. Ein reales in ein Nutzfahrzeug eingebautes elektronisches Bremssystem 60 wird üblicherweise nicht nur einen Bremszylinder 64 und nicht nur einen Drucksensor 66 aufweisen, jedoch wurde hier zur Vereinfachung der Darstellung auf weitere Komponenten verzichtet. Weitere Teilsysteme sind in ähnlicher Weise schematisiert. Zu nennen sind die mit den Ventileinrichtungen zusammengefassten Steuergeräte einer elektronischen Niveauregulierung 82 und einer elektronischen Getriebesteuerung 92, die jeweils auch Drucksensoren 86, 96 und Verbraucher in Form von Zylinderbälgen 84, 94 aufweisen. Die Steuergeräte der Teilsysteme 60, 80, 90 sind ebenfalls mit dem CAN Bus 122 verbunden. Die Luftfederung des Fahrerhauses 72 stellt insofern einen Sonderfall dar, als dass sie keinen Drucksensor und keinen Anschluss an den CAN Bus 122 aufweist. Bei ihr handelt es sich um ein im Wesentlichen mechanisches Regelsystem. In den einzelnen Anschlussleitungen der Teilsysteme sind Schließventile 52, 54, 56, 58 mit einem Eingang, einem Ausgang und einem Steueranschluss vorgesehen, die durch das Steuergerät 30 geschaltet werden können, um die jeweiligen Teilsysteme vollständig von der Druckluftversorgungseinrichtung 10 zu entkoppeln. Denkbar ist auch eine Ansteuerung durch die Teilsysteme selbst oder einen Zentralrechner, wobei die Ventile dann vorteilhafterweise Stromlos geschlossen sind. Die Schließventile können sowohl innerhalb als auch außerhalb der Druckluftversorgungseinrichtung 10 angeordnet sein. Weiterhin ist denkbar, dass die Schließventile 52, 54, 56, 58 in einzelne Teilsysteme integriert sind. Ebenfalls dargestellt ist ein Druckluftbehälter 50, der dem elektronischen Bremssystem 60 zugeordnet ist. Weiterhin ist ein dem Mehrkreisschutzventil 22 nachgeordnetes Druckbegrenzungsventil 24 dargestellt, mit dessen Hilfe der dem Mehrkreisschutzventil 22 nachgeordnete Verbraucherkreis vor einem Überdruck geschützt werden kann. Derartige Druckbegrenzungsventile sind in allen Anschlussleitungen der Teilsysteme denkbar. Der Anschluss 100 ist für externe Sensoren vorgesehen, während der Anschluss 110 für die internen Temperatur- und Drucksensoren 122, 114 der Druckluftaufbereitungsanlage vorgesehen ist.

Für die Messung des Systemstatus, das heißt der Drücke und Temperaturen in dem Druckluftsystem des Nutzfahrzeugs werden zunächst die vorhandenen internen Sensoren 112, 114 ausgelesen, auf die das Steuergerät 30 direkt zugreifen kann, und dann externern Steuergeräte angewiesen weitere Messungen durchzuführen. Beispielsweise kann das Steuergerät 30 ein Steuergerät des elektronischen Bremssystems eines Anhängers über das Steuergerät 62 des elektronischen Bremssystems 60 des Nutzfahrzeugs veranlassen, eine Druckmessung in einem Druckbehälter des Anhängers durchzuführen. Müssen externe Steuergeräte 62, 82, 92 Druckmessungen durchführen, so müssen diese Steuergeräte entweder auch auf das Aufwecksignal des externen Timers 40 reagieren oder vom Steuergerät 30 selbst aktivierbar sein.

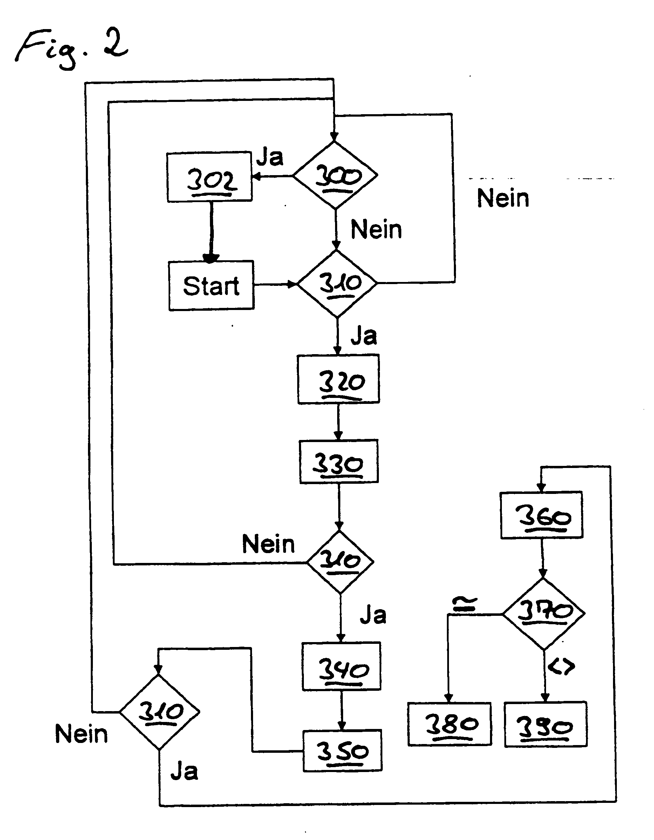

Figur 2 zeigt ein Flussdiagramm eines einfachen, erfindungsgemäßen Leckagenanalyseverfahrens. Es ist denkbar, dass das Nutzfahrzeug selbstständig entscheidet, ob eine Diagnose bei ausgeschalteter Zündung sinnvoll ist. Ein Indiz für eine Leckage kann beispielsweise eine erhöhte Einschaltdauer des Kompressors sein, die von der Fahrzeugdiagnose erkannt wird und dann eine Diagnose bei ausgeschalteter Zündung auslöst. Ausgehend vom Start wird bei 310 überprüft, ob die Zündung des Nutzfahrzeugs aus ist. Ist dies der Fall, so wird bei 320 der Systemstatus des Druckluftversorgungssystems gespeichert. Der Systemstatus umfasst beispielsweise die an den verschiedenen in dem Nutzfahrzeug verbauten Drucksensoren herrschenden Systemdrücke und die an den verschiedenen internen und externen Temperatursensoren messbaren Temperaturen. Der Systemstaus kann dabei bereits in aktueller Form vorliegen, das heißt er wurde bis zur Deaktivierung der Zündung permanent ermittelt und muss nun nur noch gespeichert werden, oder die Deaktivierung der Zündung ist ein Signal, um den Systemstatus zu bestimmen bevor das Druckluftversorgungssystem 10 in Standby-Bereitschaft geht. Anschließend wird bei 330 eine Beruhigungszeit des Druckluftversorgungssystems 10 abgewartet. Während dieser Zeitspanne ist das Druckluftversorgungssystem 10 bis auf den Aufweckschaltkreis des Steuergeräts 30 deaktiviert. Die Zeitspanne soll so bemessen sein, dass Temperatur-und Druckdifferenzen innerhalb des Druckluftversorgungssystems und der angeschlossenen Teilsysteme verschwinden, beziehungsweise sich ausgleichen. Denkbar ist beispielsweise dass das Steuergerät 30 die Zeitspanne der Beruhigungszeit in Abhängigkeit des bei 320 gemessenen Systemstatus berechnet und an den Timer übermittelt, der dann nach Ablauf der Beruhigungszeit ein Aufwecksignal an das Steuergerät 30 schickt. Während der Beruhigungszeit wird automatisch überwacht, ob die Zündung eingeschaltet wird, da das Einschalten der Zündung ebenfalls zum Aufwecken des Steuergeräts führt. Das heißt, das Steuergerät 30 durch das Signal Zündung ein aufgeweckt. Wird die Zündung nicht eingeschaltet, so wird bei 340 ein erster Systemstatus bestimmt und weiterverarbeitet. Die Weiterverarbeitung kann beispielsweise die Bestimmung eines geeigneten Zeitintervalls A umfassen, nach welchem eine erneute Überprüfung des Systemstatus stattfinden soll. Dieses wird wieder vom Steuergerät 30 an den externen Timer 40 gesendet. Die Größe des Zeitintervalls kann zum Beispiel von der Größe einer vermuteten Leckage oder dem verbleibenden Luftvolumen abhängig gemacht werden. Anschließend geht das Steuergerät wieder in Standby-Bereitschaft. Bei 350 sendet der externe Timer 40 wieder das Aufwecksignal an das Steuergerät 30, nachdem das zuvor bestimmte Zeitintervall A verstrichen ist. Wird während des Zeitintervalls A die Zündung aktiviert, so wird das Steuergerät automatisch durch das Signal Zündung an aufgeweckt, was mit einer permanenten Überwachung, ob die Zündung aktiviert ist, identisch ist. Wird das Steuergerät vom Aufwecksignal aktiviert, so wird bei 360 ein zweites Mal der Systemstatus bestimmt und weiterverarbeitet. Bei 370 erfolgt der Vergleich zwischen dem ersten und dem zweiten bestimmten Systemstatus. Stimmen beide Werte in etwa überein, so kann die Prüfroutine bei 380 beendet werden, da keine Leckage detektiert wurde. Es ist nur eine ungefähre Übereinstimmung zwischen dem ersten und dem zweiten Systemstatus notwendig, da zum einen Messtoleranzen berücksichtigt werden müssen und zum anderen auch ein vollständig intaktes Druckluftversorgungssystem 10 geringe Luftverluste, beispielsweise an Ventildichtungen, aufweisen kann. In diesem Fall wird die Leckagenanalyse sinnvollerweise beendet.

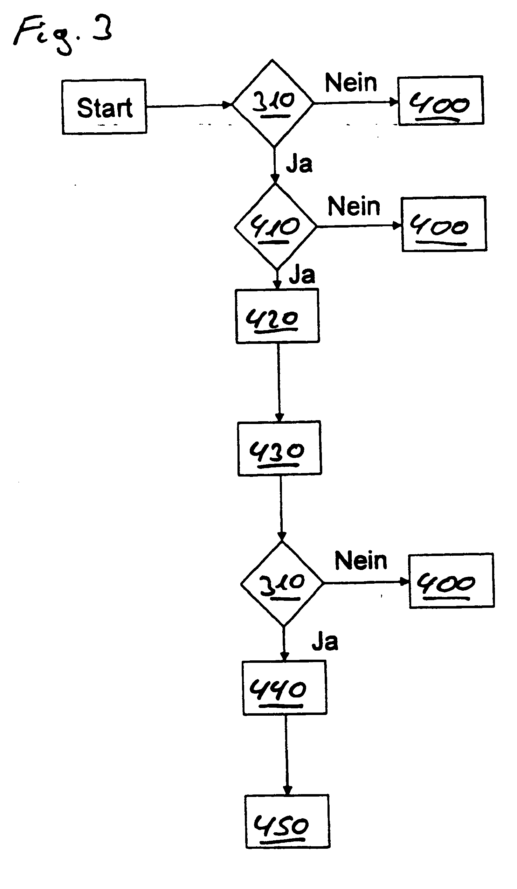

Weichen der erste und der zweite Systemstatus stark voneinander ab, so wird bei 390 eine Leckage detektiert. Die Detektion kann zur späteren Ausgabe eines Warnsignals an den Fahrer beispielsweise gespeichert werden und/oder zur weiteren Eingrenzung der Leckage verwendet werden. Eine weitere Eingrenzung des Orts der Leckage kann beispielsweise mit der in Figur 3 beschriebenen erweiterten Analyse erreicht werden. Bei der Speicherung ist denkbar, dass auch die geschätzte Größe des Lecks in Form des Luftverlustes pro Zeiteinheit zusätzlich abgespeichert wird.

Ist zu irgendeinem Zeitpunkt der Analyse die Zündung eingeschaltet worden, so wird bei 300 überprüft ob der Motor läuft. Falls ja, wird die Leckagenanalyse bei 302 zunächst beendet und beim Start fortgefahren wenn der Motor wieder ausgeschaltet wird. Falls nein, wird wieder bei 310 überprüft, ob die Zündung ausgeschaltet ist.

Figur 3 zeigt ein Flussdiagramm eines erweiterten erfindungsgemäßen Leckagenanalyseverfahrens. Ausgangspunkt beim Start kann beispielsweise sein, dass in einer ersten einfachen Leckagenanalyse eine Leckage des Druckluftversorgungssystems detektiert wurde, beispielsweise bei 390. Die erweiterte Leckagenanalyse könnte jedoch auch in einem Servicebetrieb direkt gestartet werden.

Zunächst wird wieder bei 310 überprüft, ob die Zündung des Nutzfahrzeugs aus ist. Falls nein, das heißt die Zündung ist angeschaltet, wird die Prüfroutine bei 400 beendet. Ist die Zündung ausgeschaltet, wird bei 410 überprüft, ob ein Sperrventil schaltbar ist. Als Sperrventil wird in diesem Zusammenhang jedes in der Druckluftversorgungseinrichtung vorhandene Ventil bezeichnet, das geeignet ist, einzelne Bereiche des Druckluftsystems vom Gesamtsystem zu entkoppeln. Die Idee dahinter ist, den genauen Leckagebereich aufgrund weiterer Druckverluste näher einzugrenzen. Es können verschiedene Gründe vorliegen, weshalb ein Absperrventil nicht schaltbar sein kann. Beispielsweise könnte nicht genügend Strom vorhanden sein, um das elektrisch angesteuerte Ventil zu schalten. Es wäre auch denkbar, dass nicht genügend Druckluft für ein pneumatisches Ventil zur Verfügung steht. Dies kann insbesondere bei größeren Leckagen schnell eintreten. Auch das Mehrkreisschutzventil 22 kann unterhalb des Schließdruckes als Absperrventil verwendet werden, oder unabhängig von den anliegenden Drücken schaltbar ausgelegt sein. Die Schließdrücke der einzelnen an das Mehrkreisschutzventil 22 angeschlossen Kreise sind vorteilhafterweise unterschiedlich, um nacheinander die Dichtheit der Kreise überprüfen zu können. Wenn kein Absperrventil schaltbar ist, wird die Prüfroutine bei 400 beendet.

Ist ein Sperrventil schaltbar, so wird es bei 420 geschaltet, das heißt das Druckluftsystem des Nutzfahrzeugs wird in mehrere Teilbereiche separiert. Je nach Größe des vorher bestimmten Luftverlustes wird ein Zeitintervall B bestimmt. Die Größe des Zeitintervalls B wird vom Steuergerät 30 berechnet und an den externen Timer 40 übertragen. Nach dem Verstreichen des Zeitintervalls B schickt der externe Timer ein Aufwecksignal an das Steuergerät. Grundlage hierfür kann beispielsweise der Druckverlust und der dann erwartete Druck sein, der beispielsweise in der Nähe des Schießdrucks eines Überströmventils des Mehrkreisschutzventils 22 liegen kann. Bei 440 wird der Systemstatus der Druckluftversorgungsanlage bestimmt und weiterverarbeitet. Während des Zeitintervalls B wird ständig überprüft, ob die Zündung des Nutzfahrzeugs eingeschaltet wird, was in einfacher Weise geschehen kann, da die Aktivierung der Zündung das Steuergerät 30 automatisch aufweckt. Wird die Zündung eingeschaltet, so wird bei 400 die Prüfroutine beendet. Bei 450 erfolgt ein Vergleich des bei 440 bestimmten und weiterverarbeiteten Systemstatus mit dem weiterverarbeiteten Systemstatus der beim Start der erweiterten Leckagenanalyse vorlag. Analog zu dem in Figur 2 beschriebenen einfachen Leckagenanalyseverfahren ist auch hier durch größere Druckveränderungen in Teilbereichen des Druckluftsystems des Nutzfahrzeugs eine Detektierung und genauere Zuordnung von Leckagen möglich. Das Ergebnis des erweiterten Prüfverfahrens kann wieder analog zu Figur 2 gespeichert werden, um beim Aktivieren der Zündung eine entsprechende Fehlermeldung ausgeben zu können.

Die in den Figuren 2 und 3 angegebenen Verfahren können je nach Bedarf unterschiedlich oft durchlaufen werden. Insbesondere ist denkbar, bei Figur 3 verschiedene Absperrventile nacheinander oder gleichzeitig während verschiedener Durchläufe zu schalten.

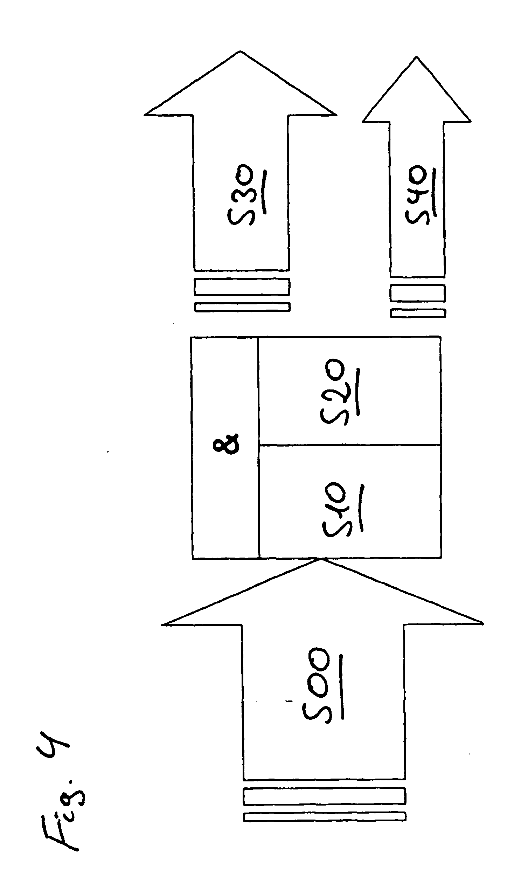

Figur 4 zeigt eine vereinfachte Darstellung der während des Verfahrens stattfindenden Datenverarbeitung. Bei 500 werden zunächst Eingangsdaten zum Beginn des Verfahrens eingelesen. Dazu gehören beispielsweise eventuelle Fehlermeldungen von angeschlossenen Druckluftverbrauchenden Teilsystemen, das Luftvolumen des Systems und bereits bekannte sonstige Leckagen des Druckluftsystems, die mitbewertet werden können. Darüber hinaus zählen auch sämtliche gemessene Druck- und Temperaturdaten zu den Eingangsdaten 500. Aus den Eingangsdaten 500 wird der aktuelle Systemstatus 520 ermittelt. Dabei können beispielsweise die gemessenen Temperaturdaten verwendet werden, um temperaturunabhängige Druckwerte im Druckluftsystem des Nutzfahrzeugs zu ermitteln. Im zentralen Block des in Figur 4 dargestellten Diagramms wird der ermittelte Systemstatus mit einem ähnlichen Datenblock 510, der den gespeicherten Systemstatus umfasst, verknüpft. Diese Verknüpfung umfasst insbesondere einen Vergleich der Druckwerte. Beim Ergebnis wird zwischen den sofort stattfindenden Handlungen des Steuergerätes 30 bei 530 und der Ausgabe einer Fehlermeldung bei 540 unterschieden, da letztere erst später stattfindet. Zu den sofort stattfindenden Handlungen zählt beispielsweise das aktive Schalten von Ventilen, um Teilbereiche der Druckluftführenden Systeme vom Gesamtsystem zu trennen. Weiterhin zählt dazu das Senden von Informationen, beispielsweise das Senden der Länge des nächsten Zeitintervalls nachdem ein erneutes Aufwecksignal vom externen Timer 40 erwartet wird.

Zum Ausgeben der Fehlermeldung zählt insbesondere das Abspeichern eines entsprechenden Fehlercodes, da die Ausgabe der Fehlermeldung selbst erst Sinn macht, wenn die Zündung des Nutzfahrzeuges wieder aktiviert wird oder sich das Nutzfahrzeug im Diagnosebetrieb befindet. In diesem Fall kann beispielsweise durch eine Warnlampe oder über ein im Fahrerhaus angeordnetes Display oder eine externe Diagnoseeinrichtung die Detektion einer Leckage dem Fahrer mitgeteilt werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

| | |
|---|---|
| 10 | Druckluftversorgungseinrichtung |
| 20 | Luftversorgungsmodul |
| 22 | Mehrkreisschutzventil |
| 24 | Druckbegrenzungsventil |
| 30 | Steuergerät mit Aufweckschaltkreis |
| 32 | Aufwecksignal |
| 40 | externe Zeitquelle |
| 42 | Anschluss Stromversorgung |
| 50 | Behälter |
| 52 | Schließventil |
| 54 | Schließventil |
| 56 | Schließventil |
| 58 | Schließventil |
| 60 | Elektronisches Bremssystem |
| 62 | Steuergerät mit Ventileinrichtungen |
| 64 | Zylinderbalg |
| 66 | Drucksensor |
| 72 | Luftfederung Fahrerhaus |
| 80 | Elektronische Niveauregulierung |
| 82 | Steuergerät mit Ventileinrichtungen |
| 84 | Zylinderbalg |
| 86 | Drucksensor |
| 90 | Elektronische Getriebesteuerung |
| 92 | Steuergerät mit Ventileinrichtungen |
| 94 | Zylinderbalg |
| 96 | Drucksensor |
| 100 | Anschlussleitung externe Sensordaten |
| 110 | Anschlussleitung interne Sensordaten |
| 112 | Anschluss Temperatursensoren |
| 114 | Anschluss Drucksensoren |
| 120 | Anschluss CAN Bus |
| 122 | CAN Busleitung |
| 200 | Diagnosedaten |
| 210 | Hauptsystem |
| 220 | Subsysteme |
| 230 | Fehlermeldungen |
| 240 | Steuersignale |
| 300 | Motor an? |
| 302 | Routine beenden |
| 310 | Zündung aus? |
| 320 | Abspeichern des Systemstatus |
| 330 | Beruhigungszeit |
| 340 | 1. Systemstatus bestimmen und weiterverarbeiten |
| 350 | Timer sendet Signal nach Zeitintervall A |
| 360 | 2. Systemstatus bestimmen und weiterverarbeiten |
| 370 | Vergleich 1. und 2. Systemstatus |
| 380 | Prüfroutine beenden |
| 390 | Leckage detektiert |
| 400 | Routine beenden |
| 410 | Sperrventil schaltbar? |
| 420 | Sperrventil schalten |
| 430 | Timer sendet Signal nach Zeitintervall B |
| 440 | Systemstatus bestimmen und weiterverarbeiten |
| 450 | Vergleich Systemstatus bei Start mit Systemstatus bei 440 |
| 500 | Eingangsdaten |
| 510 | gespeicherter Systemstatus |
| 520 | ermittelter Systemstatus |
| 530 | Ventile schalten/Nachrichten senden |
| 540 | Fehlermeldungen ausgeben |

## Patentansprüche

1. Druckluftversorgungseinrichtung (10) für ein Nutzfahrzeug, mit
- einem Druckluftversorgungsmodul (20), das ein Steuergerät aufweist,
- einem Anschluss an den CAN Bus oder ein serielles Datenübertragungssystem des Nutzfahrzeugs (122) und
- mindestens einem Anschluss für ein Druckluftnutzendes Teilsystem des Nutzfahrzeugs,
- wobei das Steuergerät eine Messung mindestens eines Systemdrucks wiederholt durchführt und weiterverarbeitet, wenn die Zündung des Nutzfahrzeugs eingeschaltet ist,
**dadurch gekennzeichnet,**
- **dass** das Steuergerät einen direkt oder indirekt an einen externen Timer (40) gekoppelten Aufweckschaltkreis (30) aufweist,
- **dass** der externe Timer (40) in der Weise ausgebildet ist, dass er Aufwecksignale an das Steuergerät mit Aufweckschaltkreis (30) ausgibt und
- **dass** das Steuergerät mit Aufweckschaltkreis (30) in der Weise ausgebildet ist, dass es im Anschluss an den Empfang eines Aufwecksignals eine Messung mindestens eines Systemdrucks durchführt und weiterverarbeitet, auch wenn die Zündung des Nutzfahrzeugs ausgeschaltet ist.

2. Druckluftversorgungseinrichtung nach Anspruch 1, **dadurch gekennzeichnet, dass** die Druckluftversorgungseinrichtung Anschlüsse für Sensoren (100, 110) aufweist.

3. Druckluftversorgungseinrichtung nach Anspruch 1 oder 2, **dadurch gekennzeichnet, dass** das Steuergerät mit Aufweckschaltkreis (30) indirekt über den CAN Bus (122) mit dem externen Timer (40) gekoppelt ist.

4. Druckluftversorgungseinrichtung nach Anspruch 1 oder 2, **dadurch gekennzeichnet, dass** das Steuergerät mit Aufweckschaltkreis (30) direkt über eine separate Leitung (32) mit dem externen Timer (40) gekoppelt ist.

5. Druckluftversorgungseinrichtung nach einem der vorhergehenden Ansprüche, **dadurch gekennzeichnet, dass** das Steuergerät mit Aufweckschaltkreis (30) in der Weise ausgebildet ist, dass bei der Weiterverarbeitung des gemessenen mindestens einen Systemdrucks ein Zeitintervall bestimmbar ist, nach dessen Verstreichen eine erneute Messung erfolgen soll und diese Information an den externen Timer (40) sendet.

6. Druckluftversorgungseinrichtung nach einem der vorhergehenden Ansprüche, **dadurch gekennzeichnet, dass** das Steuergerät mit Aufweckschaltkreis (30) in der Weise ausgebildet ist, dass ein mit der Druckluftversorgungseinrichtung (10) verbundenes Teilsystem des Nutzfahrzeugs, das auch bei ausgeschalteter Zündung Druckluft verbrauchen kann, durch ein Schließventil (52) vollständig von der Druckluftversorgung entkoppelbar ist.

7. Druckluftversorgungseinrichtung nach einem der vorhergehenden Ansprüche, **dadurch gekennzeichnet, dass** das Steuergerät mit Aufweckschaltkreis (30) in der Weise ausgebildet ist, dass bei der Weiterverarbeitung des gemessenen mindestens einen Systemdrucks bei ausgeschalteter Zündung ein Ventil (52, 54, 56, 58) zum Unterteilen des Druckluftversorgungssystems schaltbar ist.

8. Druckluftversorgungseinrichtung nach einem der vorhergehenden Ansprüche, **dadurch gekennzeichnet, dass** das Steuergerät mit Aufweckschaltkreis (30) in der Weise ausgebildet ist, dass es sich nach der Weiterverarbeitung des gemessenen mindestens einen Systemdrucks bei ausgeschalteter Zündung deaktiviert.

9. Druckluftversorgungseinrichtung nach einem der vorhergehenden Ansprüche, **dadurch gekennzeichnet, dass** das Steuergerät mit Aufweckschaltkreis (30) in der Weise ausgebildet ist, dass der Wert des gemessenen mindestens einen Systemdrucks mit von Temperatursensoren (112) des Druckluftversorgungssystems (10) gemessenen Temperaturen korrigierbar ist.

10. Druckluftversorgungseinrichtung nach einem der vorhergehenden Ansprüche, **dadurch gekennzeichnet, dass** das Steuergerät mit Aufweckschaltkreis (30) in der Weise ausgebildet ist, dass der Wert des gemessenen mindestens einen Systemdrucks mit von nicht dem Druckluftversorgungssystem (10) zugehörigen Temperatursensoren gemessenen Temperaturen korrigierbar ist.

11. Druckluftversorgungseinrichtung nach einem der vorhergehenden Ansprüche, **dadurch gekennzeichnet, dass** das Steuergerät mit Aufweckschaltkreis (30) eine Pufferbatterie aufweist.

12. Druckluftversorgungseinrichtung nach einem der vorhergehenden Ansprüche, **dadurch gekennzeichnet, dass** der externe Timer (40) einer Pufferbatterie aufweist.

13. Verfahren zum Steuern einer Druckluftversorgungseinrichtung (10) für ein Nutzfahrzeug, mit
- einem Druckluftversorgungsmodul (20), das ein Steuergerät aufweist,
- einem Anschluss an den CAN Bus oder ein serielles Datenübertragungssystem des Nutzfahrzeugs (122) und
- mindestens einem Anschluss für ein Druckluftnutzendes Teilsystem des Nutzfahrzeugs, - wobei das Steuergerät eine Messung mindestens eines Systemdrucks wiederholt durchführt und weiterverarbeitet, wenn die Zündung des Nutzfahrzeugs eingeschaltet ist, **dadurch gekennzeichnet,**
- **dass** das Steuergerät einen direkt oder indirekt an einen externen Timer (40) gekoppelten Aufweckschaltkreis (30) aufweist,
- **dass** der externe Timer (40) Aufwecksignale an das Steuergerät mit Aufweckschaltkreis (30) ausgibt, und
- **dass** das Steuergerät mit Aufweckschaltkreis (30) im Anschluss an den Empfang eines Aufwecksignals eine Messung mindestens eines Systemdrucks durchführt und weiterverarbeitet, auch wenn die Zündung des Nutzfahrzeugs ausgeschaltet ist.

14. Verfahren nach Anspruch 13, **dadurch gekennzeichnet, dass** das Aufwecksignal von dem externen Timer (40) über den CAN Bus (122) an das Steuergerät mit Aufweckschaltkreis (30) gesendet wird.

15. Verfahren nach Anspruch 13, **dadurch gekennzeichnet, dass** das Aufwecksignal von dem externen Timer (40) über eine separate Leitung (32) an das Steuergerät mit Aufweckschaltkreis (30) gesendet wird.

16. Verfahren nach einem der Ansprüche 13 bis 15, **dadurch gekennzeichnet, dass** bei der Weiterverarbeitung des gemessenen mindestens einen Systemdrucks ein zeitintervall bestimmt wird, nach dessen Verstreichen eine erneute Messung erfolgen soll und diese Information an den externen Timer (40) sendet.

17. Verfahren nach einem der Ansprüche 13 bis 16, **dadurch gekennzeichnet, dass** ein mit der Druckluftversorgungseinrichtung (10) verbundenes Teilsystem des Nutzfahrzeugs, das auch bei ausgeschalteter Zündung Druckluft verbrauchen kann, durch ein Schließventil (52) vollständig von der Druckluftversorgung entkoppelt wird.

18. Verfahren nach einem der Ansprüche 13 bis 17, **dadurch gekennzeichnet, dass** bei der Weiterverarbeitung des gemessenen mindestens einen Systemdrucks bei ausgeschalteter Zündung ein Ventil (52, 54, 56, 58) zum Unterteilen des Druckluftversorgungssystems geschaltet wird.

19. Verfahren nach einem der Ansprüche 13 bis 18, **dadurch gekennzeichnet, dass** sich das Steuergerät mit Aufweckschaltkreis (30) nach der Weiterverarbeitung des gemessenen mindestens einen Systemdrucks bei ausgeschalteter Zündung deaktiviert.

20. Verfahren nach einem der Ansprüche 13 bis 19, **dadurch gekennzeichnet, dass** der Wert des gemessenen mindestens einen Systemdrucks mit von Temperatursensoren (112) des Druckluftversorgungssystems (10) gemessenen Temperaturen korrigiert wird.

21. Verfahren nach einem der Ansprüche 13 bis 20, **dadurch gekennzeichnet, dass** der Wert des gemessenen mindestens einen Systemdrucks mit von nicht dem Druckluftversorgungssystem (10) zugehörigen Temperatursensoren gemessenen Temperaturen korrigiert wird.

22. Verfahren nach einem der Ansprüche 13 bis 21, **dadurch gekennzeichnet, dass** das Volumen der Druckluftanlage beim Befüllen bestimmt wird.

## Claims

1. Compressed air supply device (10) for a commercial vehicle, comprising
- a compressed air supply module (20) having a control unit,
- a connection to the CAN bus or to a serial data transmission system of the commercial vehicle (122), and
- at least one connection for a compressed air-using subsystem of the commercial vehicle,
- wherein the control unit repeatedly measures and processes at least one system pressure if the ignition of the commercial vehicle is switched on, **characterised in that**
- the control unit comprises a wakeup circuit (30) directly or indirectly coupled to an external timer (40),
- **in that** the external timer (40) is designed such that it outputs wakeup signals to the control unit having the wakeup circuit (30), and
- **in that** the control unit having the wakeup circuit (30) is designed such that, following the reception of a wakeup signal, it measures and processes at least one system pressure even if the ignition of the commercial vehicle is switched off.

2. Compressed air supply device according to claim 1, **characterised in that** the compressed air supply device comprises connections for sensors (100, 110).

3. Compressed air supply device according to claim 1 or 2, **characterised in that** the control unit having the wakeup circuit (30) is indirectly coupled to the external timer (40) via the CAN bus (122).

4. Compressed air supply device according to claim 1 or 2, **characterised in that** the control unit having the wakeup circuit (30) is directly coupled to the external timer (40) via a separate line (32).

5. Compressed air supply device according to any of the preceding claims, **characterised in that** the control unit having the wakeup circuit (30) is designed such that, when processing the at least one measured system pressure, a time interval can be determined after which a new measurement is to be carried out and this information is transmitted to the external timer (40).

6. Compressed air supply device according to any of the preceding claims, **characterised in that** the control unit having the wakeup circuit (30) is designed such that a subsystem of the commercial vehicle which is connected to the compressed air supply device (10) and can use compressed air even if the ignition is switched off can be completely uncoupled from the compressed air supply by a normally open valve (52).

7. Compressed air supply device according to any of the preceding claims, **characterised in that** the control unit having the wakeup circuit (30) is designed such that, during the further processing of the at least one measured system pressure while the ignition is switched off, a valve (52, 54, 56, 58) can be switched in order to divide the compressed air supply system.

8. Compressed air supply device according to any of the preceding claims, **characterised in that** the control unit having the wakeup circuit (30) is designed such that it is deactivated after the further processing of the at least one measured system pressure while the ignition is switched off.

9. Compressed air supply device according to any of the preceding claims, **characterised in that** the control unit having the wakeup circuit (30) is designed such that the value of the at least one measured system pressure can be corrected using temperatures measured by temperature sensors (112) of the compressed air supply system (10).

10. Compressed air supply device according to any of the preceding claims, **characterised in that** the control unit having the wakeup circuit (30) is designed such that the value of the at least one measured system pressure can be corrected using temperatures which are not measured by temperature sensors belonging to the compressed air supply system (10).

11. Compressed air supply device according to any of the preceding claims, **characterised in that** the control unit having the wakeup circuit (30) comprises a buffer battery.

12. Compressed air supply device according to any of the preceding claims, **characterised in that** the external timer (40) comprises a buffer battery.

13. Method for controlling a compressed air supply device (10) for commercial vehicle, the device comprising
- a compressed air supply module (20) having a control unit,
- a connection to the CAN bus or to a serial data transmission system of the commercial vehicle (122), and
- at least one connection for a compressed air-using subsystem of the commercial vehicle,
- wherein the control unit repeatedly measures and processes at least one system pressure if the ignition of the commercial vehicle is switched on, **characterised in that**
- the control unit comprises a wakeup circuit (30) directly or indirectly coupled to an external timer (40),
- **in that** the external timer (40) outputs wakeup signals to the control unit having the wakeup circuit (30), and
- **in that** the control unit having the wakeup circuit (30), following the reception of a wakeup signal, measures and processes at least one system pressure even if the ignition of the commercial vehicle is switched off.

14. Method according to claim 13, **characterised in that** the wakeup signal is transmitted by the external timer (40) via the CAN bus (122) to the control unit having the wakeup circuit (30).

15. Method according to claim 13, **characterised in that** the wakeup signal is transmitted by the external timer (40) via a separate line (32) to the control unit having the wakeup circuit (30).

16. Method according to any of claims 13 to 15, **characterised in that**, when further processing the at least one measured system pressure, a time interval is determined after which a new measurement is to be carried out and this information is transmitted to the external timer (40).

17. Method according to any of claims 13 to 16, **characterised in that** a subsystem of the commercial vehicle which is connected to the compressed air supply device (10) and can use compressed air even if the ignition is switched off is completely uncoupled from the compressed air supply by a normally open valve (52).

18. Method according to any of claims 13 to 17, **characterised in that**, during the further processing of the at least one measured system pressure while the ignition is switched off, a valve (52, 54, 56, 58) is switched in order to divide the compressed air supply system.

19. Method according to any of claims 13 to 18, **characterised in that** the control unit having the wakeup circuit (30) is deactivated after the further processing of the at least one measured system pressure while the ignition is switched off.

20. Method according to any of claims 13 to 19, **characterised in that** the value of the at least one measured system pressure is corrected using temperatures measured by temperature sensors (112) of the compressed air supply system (10).

21. Method according to any of claims 13 to 20, **characterised in that** the value of the at least one measured system pressure is corrected using temperatures which are not measured by temperature sensors belonging to the compressed air supply system (10).

22. Method according to any of claims 13 to 21, **characterised in that** the volume of the pneumatic system is determined in the filling process.

## Revendications

1. Dispositif (10) d'alimentation en air comprimé pour un véhicule utilitaire, comprenant
- un module (20) d'alimentation en air comprimé, qui a un appareil de commande,
- une connexion au bus CAN ou à un système séquentiel de transmission de données du véhicule (122) utilitaire et
- au moins une connexion pour un sous-système utilisant de l'air comprimé du véhicule utilitaire,
- dans lequel l'appareil de commande effectue de manière répétée une mesure d'au moins une pression du système et la traite ensuite, si l'allumage du véhicule utilitaire est en circuit,
**caractérisé**
- **en ce que** l'appareil de commande a un circuit (30) de mise en éveil adjoint directement ou indirectement à une minuterie (40) extérieure,
- **en ce que** la minuterie (40) extérieure est constituée de manière à émettre des signaux de mise en éveil vers l'appareil de commande par le circuit (30) de mise en éveil et
- **en ce que** l'appareil de commande ayant le circuit (30) de mise en éveil est constitué de manière à effectuer, à la suite de la réception d'un signal de mise en éveil, une mesure d'au moins une pression du système et à le transformer, même si l'allumage du véhicule utilitaire est hors circuit.

2. Dispositif d'alimentation en air comprimé suivant la revendication 1, **caractérisé en ce que** le dispositif d'alimentation en air comprimé a des connexions pour des capteurs (100, 110).

3. Dispositif d'alimentation en air comprimé suivant la revendication 1 ou 2, **caractérisé en ce que** l'appareil de commande ayant un circuit (30) de mise en éveil est couplé à la minuterie (40) extérieure indirectement par le bus CAN (122).

4. Dispositif d'alimentation en air comprimé suivant la revendication 1 ou 2, **caractérisé en ce que** l'appareil de commande ayant un circuit (30) de mise en éveil est couplé à la minuterie (40) extérieure directement par une ligne (32) distincte.

5. Dispositif d'alimentation en air comprimé suivant l'une des revendications précédentes, **caractérisé en ce que** l'appareil de commande ayant un circuit (30) de mise en éveil est constitué de manière à ce que, lors de la transformation de la au moins une pression du système qui a été mesurée, il puisse être défini un intervalle de temps, à l'expiration duquel une mesure renouvelée doit être effectuée et cette information est envoyée à la minuterie (40) extérieure.

6. Dispositif d'alimentation en air comprimé suivant l'une des revendications précédentes, **caractérisé en ce que** l'appareil de commande ayant un circuit (30) de mise en éveil est constitué de manière à ce qu'un sous-système, relié au dispositif (10) d'alimentation en air comprimé, du véhicule utilitaire, qui peut consommer aussi de l'air comprimé lorsque l'allumage est hors circuit, puisse être découplé complètement de l'alimentation en air comprimé par un robinet (52) d'arrêt.

7. Dispositif d'alimentation en air comprimé suivant l'une des revendications précédentes, **caractérisé en ce que** l'appareil de commande ayant un circuit (30) de mise en éveil est constitué de manière à ce que, lors de la transformation de la au moins une pression du système qui a été mesurée alors que l'allumage est hors circuit, une vanne (52, 54, 56, 58) puisse être mise en circuit pour subdiviser le système d'alimentation en air comprimé.

8. Dispositif d'alimentation en air comprimé suivant l'une des revendications précédentes, **caractérisé en ce que** l'appareil de commande ayant un circuit (30) de mise en éveil est constitué de manière à ce que, après la transformation de la au moins une pression du système qui a été mesurée, il se désactive lorsque l'allumage est hors circuit.

9. Dispositif d'alimentation en air comprimé suivant l'une des revendications précédentes, **caractérisé en ce que** l'appareil de commande ayant un circuit (30) de mise en éveil est constitué de manière à ce que la valeur de la au moins une pression du système qui a été mesurée puisse être corrigée par des températures mesurées par des capteurs (112) de température du système (10) d'alimentation en air comprimé.

10. Dispositif d'alimentation en air comprimé suivant l'une des revendications précédentes, **caractérisé en ce que** l'appareil de commande ayant un circuit (30) de mise en éveil est constitué de manière à ce que la valeur de la au moins une pression du système qui a été mesurée puisse être corrigée par des températures mesurées par des capteurs de température n'appartenant pas au système (10) d'alimentation en air comprimé.

11. Dispositif d'alimentation en air comprimé suivant l'une des revendications précédentes, **caractérisé en ce que** l'appareil de commande ayant un circuit (30) de mise en éveil a une batterie tampon.

12. Dispositif d'alimentation en air comprimé suivant l'une des revendications précédentes, **caractérisé en ce que** la minuterie (40) extérieure a une batterie tampon.

13. Procédé de commande d'un dispositif (10) d'alimentation en air comprimé pour un véhicule utilitaire, comprenant
- un module (20) d'alimentation en air comprimé, qui a un appareil de commande,
- une connexion au bus CAN ou à un système séquentiel de transmission de données du véhicule (122) utilitaire et
- au moins une connexion pour un sous-système utilisant de l'air comprimé du véhicule utilitaire,
- dans lequel l'appareil de commande effectue de manière répétée une mesure d'au moins une pression du système et la traite ensuite, si l'allumage du véhicule utilitaire est en circuit,
**caractérisé**
- **en ce que** l'appareil de commande a un circuit (30) de mise en éveil adjoint directement ou indirectement à une minuterie (40) extérieure,
- **en ce que** la minuterie (40) extérieure est constituée de manière à émettre des signaux de mise en éveil vers l'appareil de commande par le circuit (30) de mise en éveil et
- **en ce que** l'appareil de commande ayant le circuit (30) de mise en éveil est constitué de manière à effectuer à la suite de la réception d'un signal de mise en éveil une mesure d'au moins une pression du système et à la transformer, même si l'allumage du véhicule utilitaire est hors circuit.

14. Procédé suivant la revendication 13, **caractérisé en ce que** le signal de mise en éveil est envoyé par la minuterie (40) extérieure à l'appareil de commande ayant un circuit (30) de mise en éveil par l'intermédiaire du bus CAN (122).

15. Procédé suivant la revendication 13, **caractérisé en ce que** le signal de mise en éveil est envoyé à l'appareil de commande ayant un circuit (30) de mise en éveil par la minuterie (40) extérieure par l'intermédiaire d'une ligne (32) distincte.

16. Procédé suivant l'une des revendications 13 à 15, **caractérisé en ce que**, lors de la transformation de la au moins une pression du système qui a été mesurée, on définit un intervalle du temps, à l'expiration duquel on doit effectuer une mesure nouvelle et envoyer cette information à la minuterie (40) extérieure.

17. Procédé suivant l'une des revendications 13 à 16, **caractérisé en ce qu'**un sous-système, relié au dispositif (10) d'alimentation en air comprimé, du véhicule utilitaire, qui peut consommer de l'air comprimé, même lorsque l'allumage est hors circuit, peut être découplé complètement de l'alimentation en air comprimé par un robinet (52) d'arrêt.

18. Procédé suivant l'une des revendications 13 à 17, **caractérisé en ce que**, lors de la transformation de la au moins une pression du système qui a été mesurée, alors que l'allumage est hors circuit, une vanne (52, 54, 56, 58) est mise en circuit pour subdiviser le système d'alimentation en air comprimé.

19. Procédé suivant l'une des revendications 13 à 18, **caractérisé en ce que** l'appareil de commande ayant un circuit (30) de mise en éveil se désactive, alors que l'allumage est hors circuit, après la transformation de la au moins une pression du système qui a été mesurée.

20. Procédé suivant l'une des revendications 13 à 19, **caractérisé en ce que** la valeur de la au moins une pression du système qui a été mesurée est corrigée par des températures mesurées par des capteurs (112) de température du système (10) d'alimentation en air comprimé.

21. Procédé suivant l'une des revendications 13 à 20, **caractérisé en ce que** la valeur de la au moins une pression du système qui a été mesurée est corrigée par des températures mesurées par des capteurs de température, qui ne font pas partie du système (10) d'alimentation en air comprimé.

22. Procédé suivant l'une des revendications 13 à 21, **caractérisé en ce qu'**on détermine le volume du système d'air comprimé lors du remplissage.
